**Europäisches Patentamt**

**European Patent Office**

**Office européen des brevets**

(19)

(11) Veröffentlichungsnummer: **0 175 112**
A2

# EUROPÄISCHE PATENTANMELDUNG

(12)

(21) Anmeldenummer: **85109774.1**

(22) Anmeldetag: **03.08.85**

(51) Int. Cl.⁴: **B 01 D 13/04,** B 05 C 9/00

(30) Priorität: **21.08.84 AT 2667/84**

(43) Veröffentlichungstag der Anmeldung: **26.03.86** **Patentblatt 86/13**

(84) Benannte Vertragsstaaten: **CH DE FR GB LI**

(71) Anmelder: **Czeija, Karl, Dipl.-Ing. Dr.jur., Gusshausstrasse 12, A-1040 Wien (AT)**

(72) Erfinder: **Czeija, Karl, Dipl.-Ing. Dr.jur., Gusshausstrasse 12, A-1040 Wien (AT)**

(74) Vertreter: **Puchberger, Georg, Dipl.-Ing. et al, Patentanwälte Dipl.-Ing. Georg Puchberger Dipl.-Ing. Rolf Puchberger Dipl.-Ing. Peter Puchberger Singerstrasse 13 Postfach 55, A-1010 Wien (AT)**

(54) **Vorrichtung und Verfahren zur Herstellung von teil-durchlässigen, asymmetrischen Verbund-Folien bzw. von solchen Membranen zur Verwendung in Umkehrosmose-Anlagen.**

(57) Vorrichtung zur Herstellung von semipermeablen, asymmetrischen, großflächig ausgelegten Verbund-Folien bzw. von solchen Filter-Membranen für Umkehrosmose-Anlagen – wobei die Verbund-Folien aus einer stärkeren, porösen Träger-Schicht (31) aus Papier oder Kunststoff und aus einem, auf derselben aufgebrachten, verhältnismäßig dünnen Film aus einem Polymer als wirksame Trenn-Schicht (32) von unter 0,1 μm aufgebaut sind –, welche Vorrichtung im wesentlichen aus einem Vakuum-Behälter (10), mit einem Einlaß (15) für ein Gasgemisch (32a) aus Monomeren als Ausgangsstoffe für die betreffende Beschichtungs-Substanz sowie einem inerten Gas und aus einem außerhalb dieses Vakuum-Behälters (10) angeordneten Hochfrequenzsender HF 40 besteht, der am Behälter zwecks Zündung des darin befindlichen Gasgemisches (32a) angekoppelt ist, wobei im Vakuum-Behälter (10) mit einem Förderorgan (21–22) eine breite Bahn der porösen Träger-Schicht (31) kontinuierlich in vertikaler Richtung bewegbar ist, welche Träger-Bahn mit der, aus den in Gasgemisch zugeführten Monomeren als Polymer aufgebauten, wirksamen Trenn-Schicht (32) beschichtbar ist und wobei die Trenn-Schicht aus einem Polymer von hochvernetztem molekularem Aufbau oder/und aus stickstoffhaltigen Verbindungen besteht.

Die Erfindung betrifft eine Vorrichtung zur Herstellung von semipermeablen, asymmetrischen Verbund-Folien bzw. von solchen Filter-Membranen für Umkehrosmose-Anlagen - wobei die Verbund-Folien aus einer stärkeren, porösen Träger-Schicht aus Papier oder Kunststoff und aus einem, auf derselben aufgebrachten, verhältnismäßig dünnen Film aus einem Polymer als wirksame Trenn-Schicht von unter 0,1 $\mu$m aufgebaut sind -, welche Vorrichtung im wesentlichen aus einem Vakuum-Behälter mit einem Einlaß für ein Gasgemisch aus Monomeren als Ausgangsstoffe für die betreffende Beschichtungs-Substanz sowie einem inerten Gas und mit den erforderlichen Regelgliedern für das Vakuum sowie für Menge und Druck des einströmenden Gasgemisches, und aus einem außerhalb dieses Vakuum-Behälters angeordneten Hochfrequenzsender besteht, welch letzterer mit seinem Ausgang am Behälter zwecks Zündung des darin befindlichen Gasgemisches angekoppelt ist; die Erfindung betrifft außerdem auch eine in einer derartigen neuen Beschichtungs-Vorrichtung hergestellte semipermeable asymmetrische Verbund-Folie - insbesondere als Filter-Membran für Umkehrosmose-Anlagen - mit einer stärkeren, porösen Träger-Schicht aus Papier oder Kunststoff und einer dünnen, wirksamen Trenn-Schicht von unter 0,1 $\mu$m aus einem Polymer.

Semipermeable, asymmetrische Verbund-Folien - welche aus einer stärkeren, porösen Träger-Schicht aus Papier oder Kunststoff und aus einem, auf derselben einseitig aufgebrachten, verhältnismäßig dünnen Film aus einem Polymer als wirksame Trenn-Schicht bestehen - werden hauptsächlich bei nach dem Prinzip der Umkehr-Osmose durchgeführten Filtrations-Verfahren verwendet: beispielsweise zur Ausscheidung von Kochsalz aus Meerwasser; insbesondere auch bei Behandlung bzw. Reinigung von Abwässern; und weiters in der chemischen sowie in der Papier-Industrie bzw. in der Lebensmittel-Industrie zum Abtrennen von organischen Molekülen - wie von Alkoholen, Aminen, Carbonsäuren, von Phenolen u.a.m.

Bei den zur Herstellung solcher semipermeabler asymmetrischer Verbund-Folien bzw. im speziellen der extrem dünnen, wirksamen Trenn-Schichten derselben aus einem Polymer bisher verwendeten Beschichtungs-Vorrichtungen konventioneller Bauart - d.h. mit außerhalb des Vakuum-Behälters

0175112

angeordnetem und an demselben, allenfalls induktiv angekoppeltem Hochfrequenzsender - wird im allgemeinen im, in den Vakuum-Behälter eingeführten Gasgemisch aus den betreffenden Monomeren mit einem inerten Gas durch Hochfrequenz-Zündung eine, beispielsweise elektrodenlose, Glimm-Entladung aufgebaut und dabei die im Bereich des Hochfrequenzfeldes stationär untergebrachte - und somit nur entsprechend kleinflächige Träger-Schicht aus Papier oder Kunststoff mit der dünnen, wirksamen Trenn-Schicht aus einem Polymer beschichtet: die bei dieser Methode erzielbare Schicht-Stärke der wirksamen Trenn-Schicht ist selbstverständlich einerseits von der spezifischen molekularen Struktur der eingesetzten Monomeren abhängig und andererseits auch von verschiedenen Parametern der Beschichtungs-Vorrichtung bzw. insbesondere von Sendeleistung sowie Feld-Dichte des eingekoppelten HF-Systems.

Bei den in der industriellen Praxis bisher angewandten zugehörigen Beschichtungs-Verfahren wird auf der im Vakuum-Behälter stationär angeordneten, verhältnismäßig klein dimensionierten, porösen Träger-Schicht aus Papier oder Kunststoff die Aufbringung der dünnen, wirksamen Trenn-Schicht - außer nach dem altbekannten Gießverfahren - neuerdings auch nach dem Prinzip der sogenannten Plasma-Polymerisation durchgeführt: dabei wird im, in den Vakuum-Behälter einströmendes Gas-Gemisch aus Monomeren, insbesondere von Styrol oder Fluorkohlenwasserstoffen, mit einem inerten Gas - somit in einem Gemisch aus Elektronen, Ionen und freien Radikalen - unter Wirkung des eingekoppelten Hochfrequenz-Feldes eine Glimm-Entladung ausgelöst und durch dieselbe wird auf der Träger-Schicht ein homogener, porenfreier Polymer-Film von hochvernetztem molekularem Aufbau aufgetragen. Handelsübliche Verbund-Folien mit nach dieser bekannten Methode hergestellten, dünnen, wirksamen Trenn-Schichten sind jedoch für Einsatz als Filter-Membranen in Umkehrosmose-Anlagen infolge verschiedener erheblicher Nachteile nur beschränkt geeignet: vor allem schon wegen der zu kleinen Abmessungen der Filter-Membranen - bis höchstens 1 $dm^2$ - sowie auch der Stärke der wirksamen Trenn-Schicht und außerdem insbesondere wegen der niedrigen mechanischen Festigkeit, zu geringer Temperatur- sowie Säurebeständigkeit, und schließlich wegen zu kleinen Wasserfluxes bzw. geringen Rückhalte-Vermögens für abzuscheidende Stoffe.

Es sollen nun Beschichtungs-Vorrichtungen der eingangs beschriebenen Bauart zur Herstellung von semipermeablen, asymmetrischen Verbund-Folien und ebenso auch in einer derartigen Vorrichtung herstellbare Verbund-Folien bzw. solche Filter-Membranen für Umkehrosmose-Anlagen derart vorteilhaft ausgebildet werden, daß in der neuen Beschichtungs-Vorrichtung in einem kontinuierlichen Arbeitsgang auch extrem großflächige semipermeable Verbund-Folien - d.h. solche in Größenordnungen von Quadratmetern - bzw. allenfalls auch durchlaufende Bahnen von Verbund-Folien erzeugt werden können, bei denen sich die aufgebrachte, dünne, wirksame Trenn-Schicht aus einem Polymer durch einwandfreie Homogenität und hohe Genauigkeit der Schichtstärke auszeichnet und welche Verbund-Folien somit größenmäßig für Einbau in handelsüblichen Filter-Modulen geeignet sind - beispielsweise in solchen zur Durchführung der Umkehr-Osmose.

Nach der Erfindung wird bei Beschichtungs-Vorrichtungen jener bekannten Bauart diese Zielsetzung in einfacher und befriedigender Weise dadurch verwirklicht, daß im - im allgemeinen zylindrischen - Vakuum-Behälter ein Förderorgan eingesetzt ist, mittels dessen eine breite Bahn der porösen Träger-Schicht kontinuierlich in vertikaler Richtung - zweckmäßig abwärts - bewegbar ist, welche Träger-Bahn mit der, aus den im Gasgemisch zugeführten Monomeren als Polymer aufgebauten, wirksamen Trenn-Schicht beschichtbar ist. Vorzugsweise ist dabei an diesem, im Vakuum-Behälter in vertikaler Lage eingesetzten Förderorgan oben eine Vorratsspule für die breite, noch leere Bahn der porösen Trenn-Schicht und unten eine antreibbare Aufwickelspule für die fertig beschichtete, semipermeable Verbund-Folie angeordnet - wobei im Vakuum-Behälter auch der Antriebsmotor für das Förderorgan, beispielsweise ein Federwerk, untergebracht sein kann.

Bei einer bevorzugten Ausführungsform dieser Beschichtungs-Vorrichtung ist am oberen Abschnitt des Vakuum-Behälters - entweder direkt an seiner Stirnwand oder allenfalls am zylindrischen Mantel - der Einlaß für das Gasgemisch mit den Monomeren bzw. für das gasförmige Beschichtungs-Medium angesetzt, welcher Einlaß zweckmäßig mit einem Rohrstutzen bis nahe an die vertikal geführte Bahn der porösen Träger-Schicht reicht.

Zweckmäßig ist dabei an diesem Einlaß des Vakuum-Behälters für das gasförmige Beschichtungs-Medium eine waagrecht liegende Düse von etwa der Bahnbreite der porösen Träger-Schicht entsprechender Breite angesetzt, welche Düse - allenfalls unter einem Anstell-Winkel - gegen die Träger-Bahn gerichtet ist.

Nach der Erfindung sind weiters die in der hier beschriebenen, neuen Beschichtungs-Vorrichtung herstellbaren, semipermeablen, asymmetrischen Verbund-Folien der eingangs gleichfalls angegebenen Gattung, welche, insbesondere auch in Umkehrosmose-Anlagen als Filter-Membrane einsetzbar sind, in befriedigender Weise derart ausgebildet, daß diese Verbund-Folien großflächig - vorzugsweise in Größenordnungen bis zu Quadratmetern - ausgelegt sind und daß die auf der breiten, porösen Trägerbahn aufgebrachte, wirksame Trennschicht aus einem Polymer von hochvernetztem molekularem Aufbau - insbesondere wenigstens im wesentlichen aus Allylchlorid oder/und aus stickstoffhaltigen Verbindungen besteht.

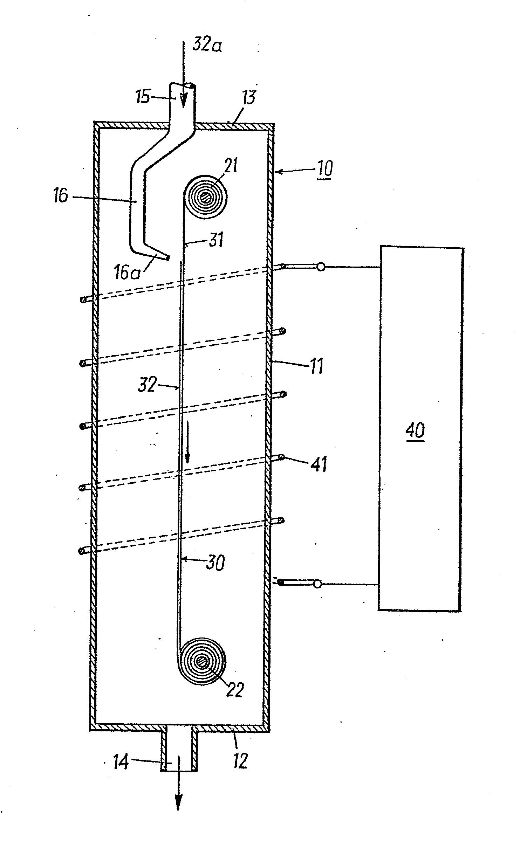

In der Zeichnung ist ein Ausführungs-Beispiel der erfindungsgemäß aufgebauten Beschichtungs-Vorrichtung zur Herstellung von semipermeablen, asymmetrischen Verbund-Folien, bzw. von solchen Filter-Membranen zum Einsatz in Umkehrosmose-Anlagen, schematisch - teilweise im Mittelschnitt - veranschaulicht, welche Vorrichtung im speziellen zur Herstellung der gleichfalls erfindungsgemäß ausgebildeten semipermeablen Verbund-Folien dient.

Die hier dargestellte Bechichtungs-Vorrichtung besteht im wesentlichen aus einem aufrecht stehenden, zylindrischen Vakuum-Behälter 10, an dessen Boden 12 ein Anschluß-Stutzen 14 für das (nicht eingezeichnete) Vakuum-Aggregat - d.s. Vakuum-Pumpe, Regel- sowie Kontroll-Organe - angebracht ist und an seiner oberen Stirnwand 13 ein Einlaß 15-16 für das zugeführte Gasgemisch 32a mit den Monomeren bzw. für das gasförmige Beschichtungs-Medium angesetzt ist; außerdem ist außerhalb dieses Vakuum-Behälters 10 ein Hochfrequenzsender HF 40 angeordnet, welcher mit seiner Ausgangsspule 41 induktiv - also elektrodenlos - am Innenraum des Vakuum-Behälters 10 angekoppelt ist. In diesem Vakuum-Behälter 10 ist in verti- kaler Lage ein Förderorgan 21-22 mit einer im oberen Abschnitt des Behälters 10 angeordneten Vorratsspule 21 für die breite noch leere Bahn der porösen Träger-Schicht 31 und mit einer unten befindlichen, antreibbaren Aufwickelspule 22 für die fertig beschichtete, semipermeable Verbund-Folie 30 eingesetzt; der Antriebsmotor für dieses Förderorgan 21-22 beispielsweise ein Federwerk, kann zweckmäßig gleichfalls im Vakuum-Behälter 10 untergebracht sein. Mittels dieses Förderorganes 21-22 wird nun von der oben angeordneten Vorratsspule 21 weg die breite noch nicht beschichtete Bahn 31 der porösen Träger-Schicht kontinuierlich vertikal abwärts geführt und diese Träger-Bahn 31 während ihres Transportes aus dem in den Vakuum-Behälter 10 durch den Einlaß 15-16 eingebrachten Gasgemisch 32a mit den Monomeren mit einer dünnen, homogenen wirksamen Trenn-Schicht 32 beschichtet - wonach schließlich die fertig beschichtete, semipermeable Verbund-Folie 30 von der unten angebrachten Aufwickelspule 22 aufgenommen wird. Der hier an der oberen Stirnwand 13 des Vakuum-Behälters 10 angesetzte Einlaß 15 für das Gasgemisch 32a - welches aus den Monomeren als Ausgangsstoff für die betreffende Beschichtungssubstanz 32 und aus einem inerten Gas besteht - ist zweckmäßig mit einem daran anschließenden Rohr-Stutzen 16 versehen, welcher bis nahe an die vertikal abwärts geführte Bahn 31 der porösen Träger-Schicht heranreicht und an dessen Ende eine gegen die zu beschichtende poröse Träger-Schicht 31 unter einem Anstell-Winkel gerichtete, waagrecht erstreckte Düse 16a von etwa der Bahnbreite der porösen Träger-Schicht 31 entsprechender Breite angesetzt ist.

In der erfindungsgemäß aufgebauten Beschichtungs-Vorrichtung können also, wie ersichtlich, in einem kontinuierlichen Arbeitsgang vor allem großformatige semipermeable, asymmetrische Verbund-Folien bis zu Größenordnungen von Quadratmetern - insbesondere auch in durchlaufenden Bahnen hergestellt werden, bei denen sich die auf der stärkeren porösen Träger-Schicht aufgebrachte, aus einem Polymer bestehende wirksame Träger-Schicht durch einwandfreie Homogenität und hohe Genauigkeit der Schichtstärke auszeichnet; diese neuen, hoch qualifizierten semipermeablen Verbund-Folien sind somit insbesondere auch für Einbau in Filter-Modulen für Umkehrosmose-Anlagen geeignet.

Patentansprüche

1. Vorrichtung zur Herstellung von semipermeablen, asymmetrischen Verbund-Folien bzw. von solchen Filter-Membranen für Umkehrosmose-Anlagen - wobei die Verbund-Folien aus einer stärkeren, porösen Träger-Schicht aus Papier oder Kunststoff und aus einem auf derselben aufgebrachten, verhältnismäßig dünnen Film aus einem Polymer als wirksame Trenn-Schicht von unter 0,1 µm aufgebaut sind -, welche Vorrichtung im wesentlichen aus einem Vakuum-Behälter, mit einem Einlaß für ein Gasgemisch aus Monomeren als Ausgangsstoffe für die betreffende Beschichtungs-Substanz sowie einem inerten Gas und mit den erforderlichen Regelgliedern für das Vakuum sowie für Menge und Druck des einströmenden Gasgemisches, und aus einem außerhalb dieses Vakuum-Behälters angeordneten Hochfrequenzsender besteht, welch letzterer mit seinem Ausgang am Behälter zwecks Zündung des darin befindlichen Gasgemisches angekoppelt ist, dadurch gekennzeichnet, daß im - im allgemeinen zylindrischen - Vakuum-Behälter (10) ein Förderorgan (21-22) eingesetzt ist, mittels dessen eine breite Bahn der porösen Träger-Schicht (31) kontinuierlich in vertikaler Richtung - zweckmäßiger Weise abwärts - bewegbar ist, welche Träger-Bahn (31) mit der, aus dem in Gasgemisch zugeführten Monomeren als Polymer aufgebauten, wirksamen Trenn-Schicht (32) beschichtbar ist.

2. Beschichtungs-Vorrichtung nach Anspruch 1, dadurch gekennzeichnet, daß am, im Vakuum-Behälter (10) in vertikaler Lage eingesetzten Förderorgan (21-22) oben eine Vorratsspule (21) für die breite, noch leere Bahn der porösen Träger-Schicht (31) und unten eine antreibbare Aufwickelspule (22) für die fertig beschichtete, semipermeable Verbund-Folie (30) angeordnet ist und daß im Vakuum-Behälter (10) zweckmäßig auch der Antriebsmotor für das Förderorgan (20) - beispielsweise ein Federwerk - untergebracht ist.

3. Beschichtungs-Vorrichtung nach Anspruch 1 oder 2, dadurch gekennzeichnet, daß am oberen Abschnitt des Vakuum-Behälters (10) - entweder direkt an seiner Stirnwand (13) oder allenfalls am zylindrischen Mantel (11) - der Einlaß (15) für das Gasgemisch (32a) mit den Monomeren bzw. für das gasförmige Beschichtungs-Medium angesetzt ist, welcher Einlaß (15) vorzugsweise mit einem Rohrstutzen (16) bis nahe an die verikal geführte Bahn der porösen Träger-Schicht (31) reicht.

4. Beschichtungs-Vorrichtung nach Anspruch 3, dadurch gekennzeichnet, daß im Vakuum-Behälter (10) am Einlaß (15 bzw. 15-16) für das gasförmige Beschichtungs-Medium (32a) eine waagrecht liegende Düse (16a) von etwa der Bahnbreite der porösen Träger-Schicht (31) entsprechender Breite angesetzt ist, welche - allenfalls unter einem Anstell-Winkel - gegen die Träger-Bahn (31) gerichtet ist.

5. Semipermeable, asymmetrische Verbund-Folie - insbesondere als Filter-Membran für Umkehrosmose-Anlagen -, hergestellt in einer Vorrichtung gemäß einem der Ansprüche 1 bis 4, mit einer stärkeren, porösen Träger-Schicht aus Papier oder Kunststoff und einer dünnen, wirksamen Trenn-Schicht von unter 0,1 μm aus einem Polymer, dadurch gekennzeichnet, daß die semipermeable Verbund-Folie (30) großflächig - vorzugsweise in Größenordnungen bis zu Quadratmetern - ausgelegt ist und daß die auf der breiten, porösen Träger-Bahn (31) aufgebrachte, wirksame Trenn-Schicht (32) aus einem Polymer von hochvernetztem molekularem Aufbau - insbesondere wenigstens im wesentlichen aus Allylchlorid - oder/und aus stickstoffhaltigen Verbindungen besteht.